# EUROPEAN PATENT SPECIFICATION

(11) **EP 1 383 022 B1**
(45) Date of publication and mention of the grant of the patent: **09.11.2005**
(21) Application number: 03015631.9
(22) Date of filing: 16.07.2003
(51) Int. Cl.: G06F 1/00

(54) **Information terminal device, additional function purchasing program, and program function adding method**
Terminal und Programm, um eine zusätzliche Funktion zu kaufen, und Verfahren zum Hinzufügen einer Programmfunktion
Terminal d'information, logiciel d'achat d'une fonction additionnelle, et méthode pour ajouter une fonction à un logiciel

(30) Priority: 18.07.2002 JP 2002209735
(43) Date of publication of application: 21.01.2004
(73) Proprietor: Olympus Corporation, Tokyo 151-0072 (JP)
(72) Inventor: Fukuoka, Norio, Olympus Optical Co., Ltd., Hachioji-shi, Tokyo (JP); Honma, Masaya, Olympus Optical Co., Ltd., Hachioji-shi, Tokyo (JP); Wada, Toshiaki, Olympus Optical Co., Ltd., Hachioji-shi, Tokyo (JP)
(74) Representative: von Hellfeld, Axel

(56) References cited:
- WO-A-01/09703
- WO-A-98/58306
- US-A1- 2002 082 997

## Description

The present invention relates to an information terminal device and a method for upgrading a program simply and flexibly and an upgraded program.

In many cases, a program running on a computer has additional function prepared separately so that they can be added to that program as necessary. To use the additional functions, a user simply purchases a new version of that program and installs it into his or her own computer.

In such a case, the user can get a program which contains the additional functions by purchasing a recording medium, such as a CD-ROM, on which the program is recorded or by downloading the program into his or her computer via a communication line. US patent publication no. 2002/082997, for example, discloses a method of downloading encrypted information.

US patent no. 6,049,671 describes a method for identifying and obtaining software from a network computer. The method audits the user terminal and provides the user with a listed summary of new or update software available.

It is an object of the present invention to provide an information terminal device, a program for the information terminal device and a method of adding a program which, when a user wants a new program from a recording medium or via a communication line, allow a related program to be selected at once and the selected program to be obtained with certainty.

An information terminal device, which is communicable with a server via a communication line according to a first aspect of the present invention is characterized by comprising: storage means for storing a first program and at least one first link information which corresponds to a second program different from the first program; display means for displaying the first link information; transmit means for, when the first link information is selected, transmitting to the server identification information for identifying the corresponding program stored in the storage means; receive means for receiving at least one of a release key and the second program transmitted from the server as the result of the identification information having been verified by the server; display control means for changing the first link information displayed on the display means to a second link information which corresponds to a program different from the second program after receipt of said second program.

The functions of each of the information terminal devices can be implemented as a program running on the information terminal device or a method of adding a subprogram to a program running on the information terminal device.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a schematic configuration of a network system which is applied to an information terminal device according to a first embodiment of the present invention;
FIG. 2 shows a specific processing example in the first embodiment of the present invention;
FIG. 3 is a flowchart illustrating the operation of the first embodiment of the present invention;
FIG. 4 is a schematic configuration of a network system which is applied to an information terminal device according to a second embodiment of the present invention;
FIG. 5 shows a specific processing example in the second embodiment of the present invention;
FIG. 6 is a flowchart illustrating the operation of the second embodiment of the present invention;
FIG. 7 is a schematic configuration of a network system which is applied to an information terminal device according to a third embodiment of the present invention;
FIG. 8 shows a specific processing example in the third embodiment of the present invention;
FIG. 9 is a flowchart illustrating the operation of the third embodiment of the present invention;
FIG. 10 is a schematic configuration of a network system which is applied to an information terminal device according to a fourth embodiment of the present invention;
FIG. 11 shows a specific processing example in the fourth embodiment of the present invention;
FIG. 12 is a flowchart illustrating the operation of the fourth embodiment of the present invention;
FIG. 13 is a schematic configuration of a network system which is applied to an information terminal device according to a fifth embodiment of the present invention;
FIG. 14 shows a specific processing example in the fifth embodiment of the present invention; and
FIG. 15 is a flowchart illustrating the operation of the fifth embodiment of the present invention.

The preferred embodiments of the present invention will be described hereinafter with reference to the accompanying drawings:

### (First Embodiment)

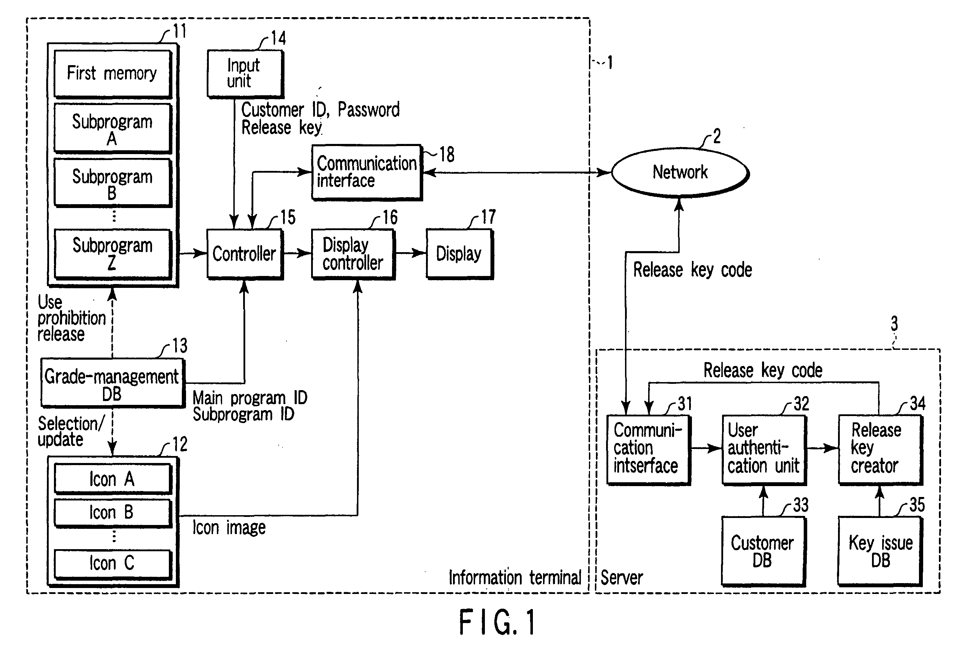

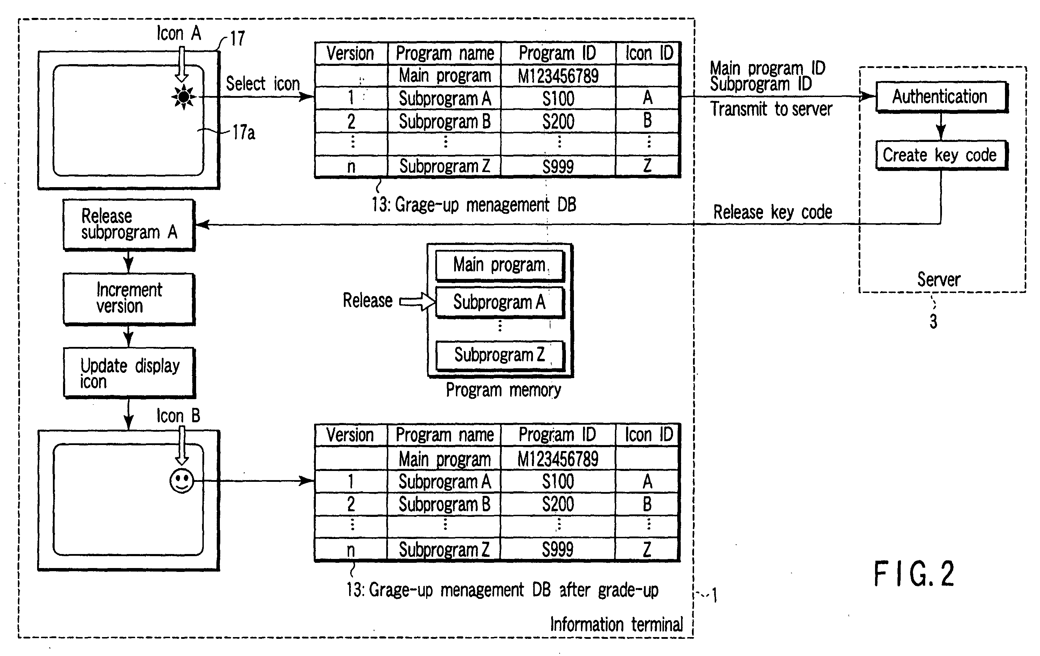

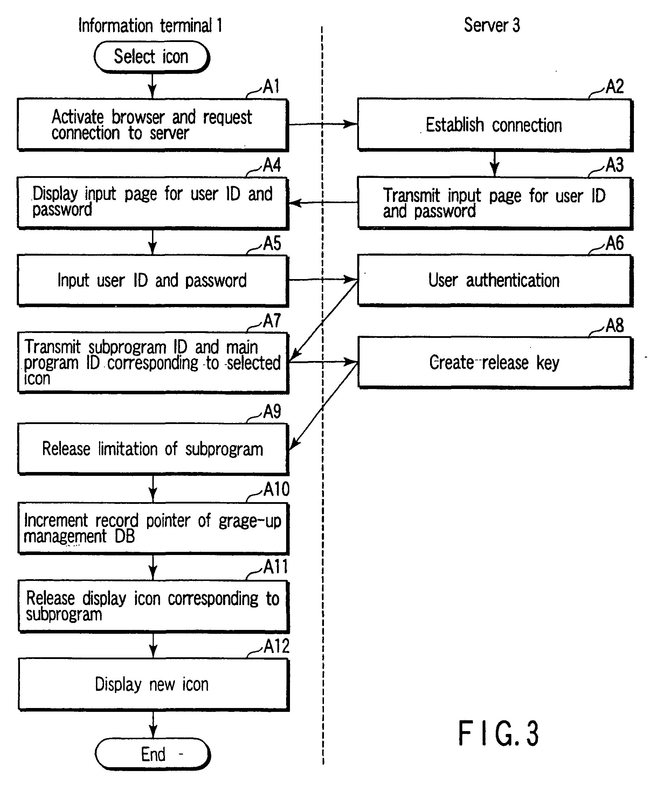

The first embodiment will be described with reference to FIGS. 1, 2 and 3. FIG. 1 is a schematic configuration of a network system which is applied to an information terminal device according to the first embodiment of the present invention. FIG. 2 shows a specific processing example in the first embodiment of the present invention. FIG. 3 is a flowchart illustrating the operation of the first embodiment of the present invention.

As shown in FIG. 1, the network system to which the present invention is applied has an information terminal device (hereinafter referred to as an information terminal) 1, a network 2, and a server 3.

The information terminal 1 according to the first embodiment, which is, for example, a personal computer (hereinafter referred to as PC) owned by a user, includes a first memory 11, a second memory 12, an upgrade management database (DB) 13, an input unit 14, a controller 15, a display controller 16, a display 17, and a communication interface 18.

The first memory 11 stores a main program and subprograms A through Z. The second memory 12 stores icons A through Z which correspond to the subprograms A through Z, respectively, which are stored in the first memory 11. The first and second memories 11 and 12, which are nonvolatile memories, external storage devices, such as magnetic disks, and so on., retain data even when the power to the information terminal 1 has been switched off. The upgrade management database 13 manages the upgrading states of the subprograms A through Z.

The input unit 14, which is an input device for the information terminal 1, such as a keyboard, a mouse, or the like, receives inputs from the user.

The controller 15 controls the overall operation of the information terminal 1.

The display controller 16 controls the display 17 so as to display various pieces of information.

Communication interface 18 communicates to the server 3 through the network 2 and other information terminal devices (not shown in the figure).

The network 2 may be of any configuration provided that it is compatible with mutual communications. The network 2 may be of any of networks compatible with mutual communications, such as internets, intranets, etc.

The server 3 includes a communications interface 31, a user authentication unit 32, a customer database (DB) 33, a release key creator 34, and a key issue database 35.

The communication interface 31 provides communications with another device (for example, the information terminal 1) connected to the network.

The user authentication unit 32 authenticates a user ID by comparison with user data in the customer DB 33 in order to determine right of access made by the user at the information terminal 1.

The release key creator 34 issues a release key to the user whose identity has been established by the user authentication unit 32 on the basis of data in the key issue database (DB) 35.

The operation of the network system thus configured will be described briefly with reference to FIG. 2.

First, if no additional function is used, only the main program can be run on the information terminal 1. Therefore, the icon A is displayed on the display screen 17a of the display 17 of the information terminal 1 to prompt the user to purchase the subprogram A. Let us suppose in this specification that the icon A functions as link information for upgrading the main program A. That is, each of the icons A through Z functions as an icon in which link information is embedded which makes available (or prompts the user to purchase) a corresponding respective one of the subprograms A through Z. In this specification, the acquisition of a release key for making available a subprogram will also be described as the purchase of a program. Suppose, for example, that the user clicks the mouse on the icon A to indicate his or her intention to purchase the subprogram A. Then, the program ID "S100" of the subprogram A corresponding to the icon A and the icon ID "A" are read from the upgrade management DB 13 and then transmitted to the server 3 together with the program ID "M123456789" of the main program and the user ID and password for identifying the user.

Upon receipt of the ID information in the communications interface 31, the server 3 determines whether or not the user has been duly registered in the user authentication unit 32. If the identity of the user has been established, the key code of the release key (hereinafter referred to simply as the release key) for the subprogram A is created in the release key creator 34 and then sent to the information terminal 1.

Based on the received release key, the information terminal 1 releases the subprogram A and makes it available, then increments a pointer indicating the version of the subprogram which is an object of purchase. To prompt the user to purchase the subprogram B prepared as the next version of the subprogram A, the icon B is displayed on the display 17 in place of the icon A.

The operation when the icon B is selected by clicking the mouse on it is the same as when the icon A is selected. After the subprogram B has been released, the icon C is displayed to prompt the user to purchase the subprogram C.

Reference is now made to the flowchart in FIG. 3 to describe the flow of processing when the user purchases a subprogram prepared in the information terminal 1.

First, when the on-screen icon (icon A in this example) is selected, a browser is activated to issue a request for connection to the server 3 (step A1). After connection to the server 3 has been established in response to this request (step A2), an entry page of user ID and password prepared in the server 3 is transmitted to the information terminal 1 (step A3).

Upon receipt of the entry page, the information terminal 1 displays it on the display 17 (step A4). The user enters the user ID and the password through the input unit 14 according to an entry request of the entry page (step A5). These data are transmitted to the server 3 for user authentication in the user authentication unit 32. When the identity of the user has been established, the server 3 requests the information terminal 1 to send the program ID "S100" of the subprogram A corresponding to the icon A and the program ID "M123456789" of the main program (step A6). If, on the other hand, the identity of the user has not been established in step A6, the server 3 notifies the information terminal 1 to that effect with a request for reentry of user information.

The information terminal 1 transmits the program ID of the subprogram A corresponding to the icon A and the program ID of the main program to the server 3 (step A7). Based on the received data, the server 3 creates a release key (step A8) and transmits it to the information terminal 1.

Upon receipt of the release key, the information terminal 1 releases the restriction of use of the subprogram A so that it becomes available on the information terminal (step A9). The record pointer in the upgrade management DB 13 is incremented (step A10).

The information terminal 1 erases the icon A displayed on the display 17 (step A11) and then displays the icon B on the display so as to prompt the user to purchase the subprogram B (step A12).

Thus, since the design of the icon as link information displayed on the display is updated each time the program is upgraded, it becomes easy to understand states of upgrading. Moreover, the program can be upgraded simply by selecting an icon, allowing ease of program upgrading.

### (Second Embodiment)

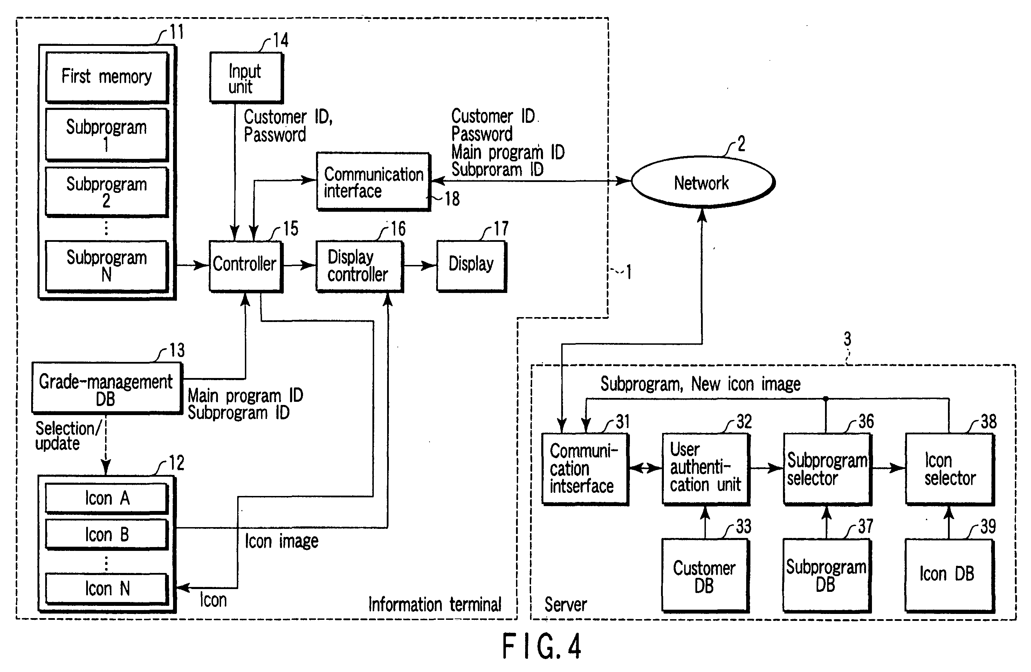

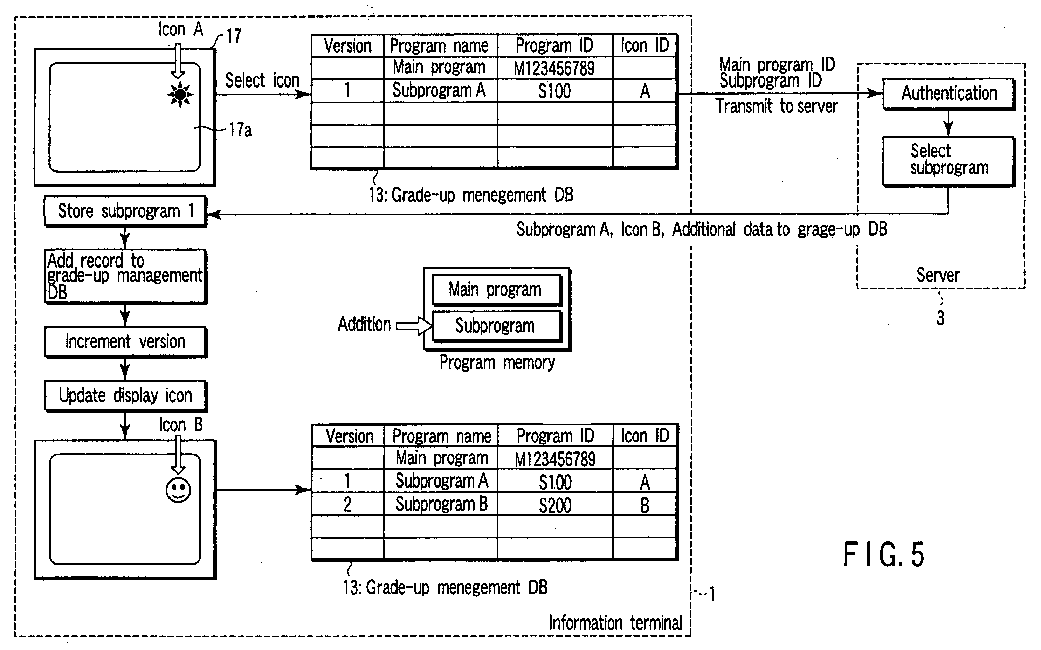

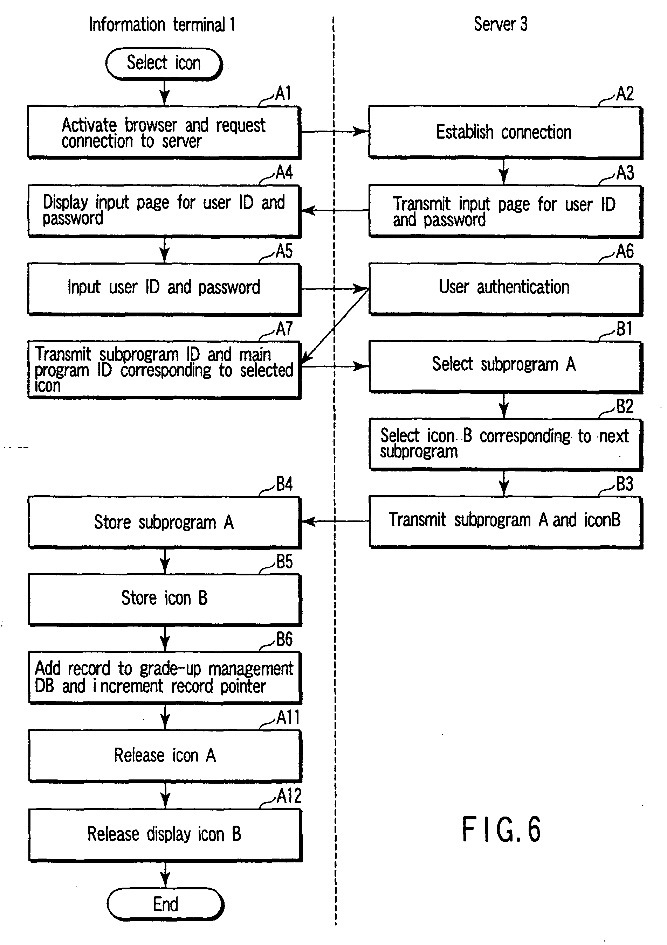

The second embodiment will be described with reference to FIGS. 4, 5 and 6. FIG. 4 is a schematic configuration of a network system which is applied to an information terminal device according to the second embodiment of the present invention. FIG. 5 shows a specific processing example in the second embodiment of the present invention. FIG. 6 is a flowchart illustrating the operation of the second embodiment of the present invention. In FIGS. 4, 5 and 6, corresponding parts to those in FIGS. 1, 2 and 3 are denoted by like reference numerals and detailed descriptions thereof are omitted.

Unlike the first embodiment in which subprograms and icons have been prepared beforehand in the information terminal, in the second embodiment, both the subprograms and the icons have been prepared in the server and a subprogram and an icon are downloaded from the server into the information terminal each time the program is upgraded.

As shown in FIG. 4, although the information terminal 1 remains unchanged in basic configuration from that in FIG. 1, the server 3 is provided with a subprogram selector 36 and an icon selector 38 in place of the release key creator 34 shown in FIG. 1. Accordingly, a subprogram database (DB) 37 and an icon database (DB) 39 are provided in place of the key issue database 35.

In FIG. 4, the subprogram selector 36 selects and extracts a subprogram requested by the information terminal 1 from the subprogram DB 37. The icon selector 38 selects and extracts from the icon database 39 the icon corresponding to the subprogram B to be purchased next to the subprogram selected by the subprogram selector 36 and upgrade DB additional data.

The operation of the network system thus configured will be described with reference to FIG. 5.

As shown in FIG. 5, clicking on the icon A causes the program ID "S100" of the subprogram A associated with the icon A to be read. The program ID "M123456789" of the main program, the program ID of the subprogram A and the user ID and password for identifying the user are transmitted to the server 3. If the identity of the user has been established, the server 3 selects the subprogram A, the icon B to prompt the user to purchase the subprogram B and upgrade DB additional data on the basis of the program ID of the main program and the program ID of the subprogram A and then transmits them to the information terminal 1.

The information terminal 1 stores the subprogram A into the first memory 11, then adds a record for the subprogram B corresponding to the next version to the upgrade management DB 13 and enters the version number "2", the program name "subprogram B", the program ID "S200" and the icon ID "B" into that record. In addition, the pointer indicating the version is incremented and the display is changed from the icon A to the icon B associated with the subprogram B.

Reference is made to the flowchart in FIG. 6 to describe the flow of processing of purchasing a subprogram prepared in the server 3.

First, the processing from the step of selecting the icon to purchase the subprogram through the step of providing user authentication (from step A1 through step A6) remains unchanged from that in the first embodiment and description thereof is omitted. After the identity of the user has been established by the authentication in the server 3, the information terminal 1 transmits the program ID of the subprogram corresponding to the icon (for example, icon A) and the program ID of the main program (step A7). Upon receipt of these transmit data, the server selects a new subprogram (subprogram A) requested by the information terminal 1 (step B1) and then selects a new icon (icon B) corresponding to a subprogram (subprogram B) to be purchased next (step B2). The server transmits the subprogram A, the icon B, and upgrade DB additional data to the information terminal 1 (step B3).

Upon receipt of the subprogram A and the icon B, the information terminal 1 stores the subprogram A into the first memory 11 (step B4), stores the icon B into the second memory 12 (step B5), and adds a record to the upgrade management DB and increments the record pointer (step B6).

The display controller 16 erases the icon A displayed on the display 17 (step A11) and displays the icon B on the display 17 so as to prompt the user to purchase the new subprogram B (step A12).

In the second embodiment, as described above, since a new subprogram is downloaded from the server 3 as necessary, there is no need of storing unnecessary subprograms in the information terminal 1. In the second embodiment, since a subprogram is downloaded at the time of purchase, there is no need of releasing the downloaded subprogram using the release key.

### (Third Embodiment)

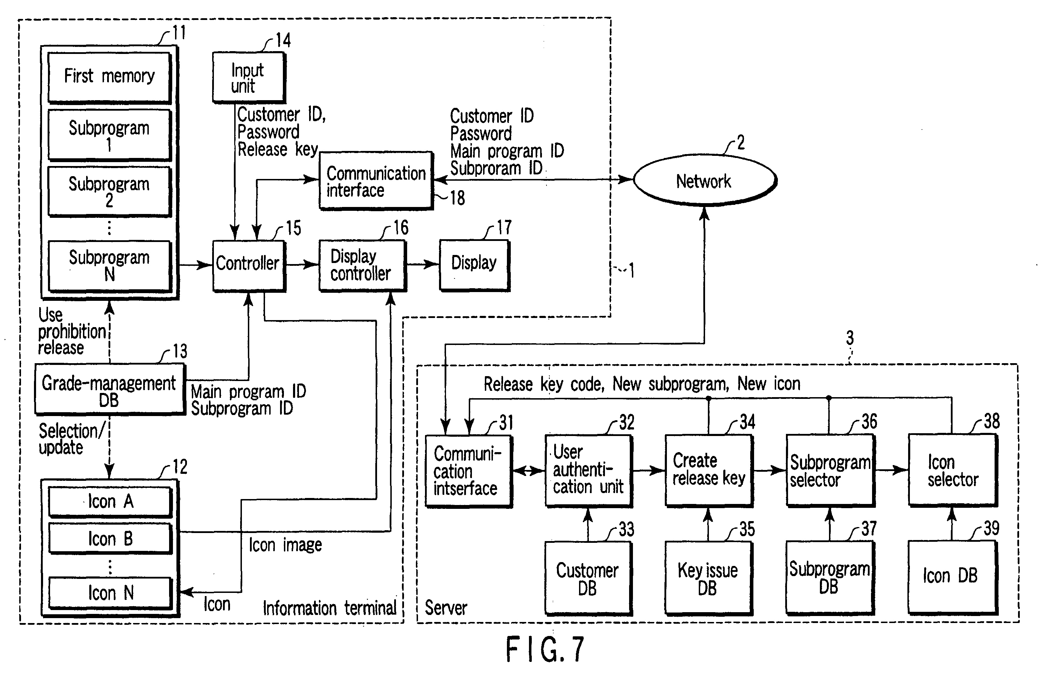

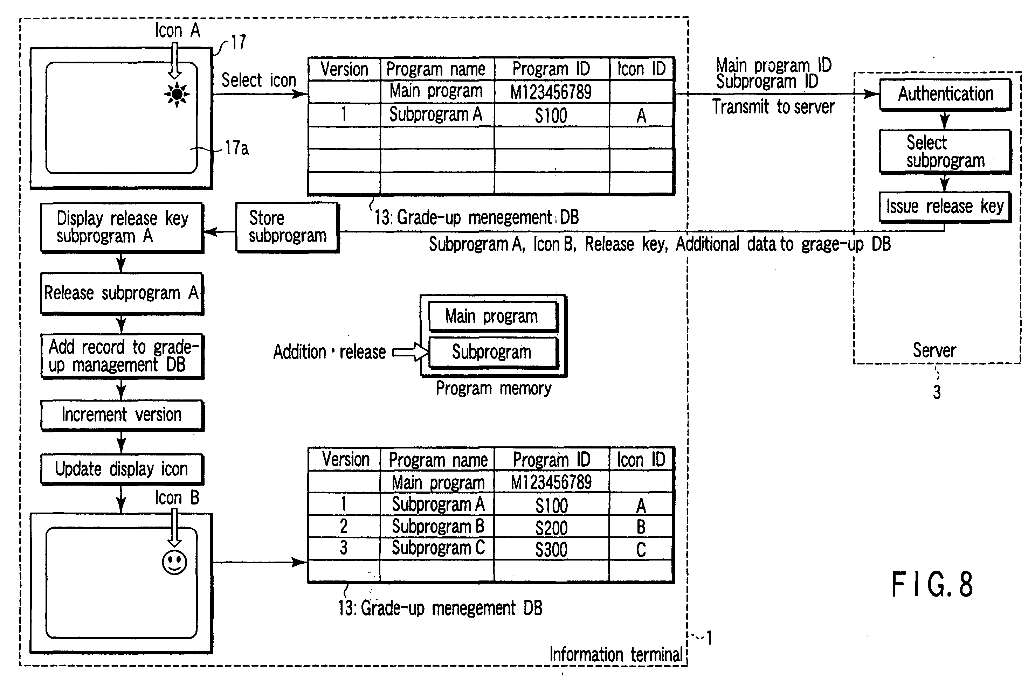

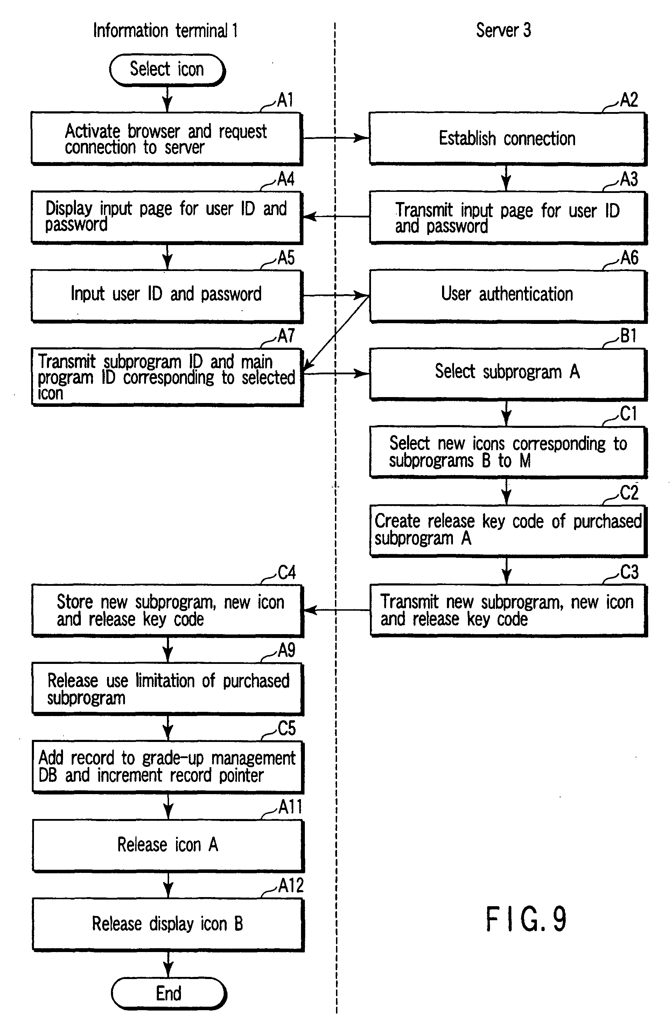

The third embodiment will be described with reference to FIGS. 7, 8 and 9. FIG. 7 is a schematic configuration of a network system which is applied to an information terminal device according to the third embodiment of the present invention. FIG. 8 shows a specific processing example in the third embodiment of the present invention. FIG. 9 is a flowchart illustrating the operation of the third embodiment of the present invention. In FIGS. 7, 8 and 9, corresponding parts to those in FIGS. 1 through 6 are denoted by like reference numerals and detailed descriptions thereof are omitted.

The third embodiment, which is an extension of the second embodiment, is configured to download subprograms which will be purchased in future at the same time the subprogram A is downloaded. The information terminal 1 and the server 3 store subprograms and icons which are not released. Although the second embodiment is configured such that, each time an icon is selected, the subprogram corresponding to the selected icon and the icon corresponding to the next subprogram are sent to the information terminal 1, the third embodiment is configured such that two or more subprograms and two or more icons are transmitted in a single operation. The third embodiment will be described below more specifically.

As shown in FIG. 7, the third embodiment is a combination of the first embodiment of FIG. 1 and the second embodiment of FIG. 4. Thus, each component in the information terminal 1 and the server 3 is identical in function to the corresponding component in the first and second embodiments and hence description thereof is omitted.

The operation of the network system thus configured will be described with reference to FIG. 8.

As shown in FIG. 8, clicking on the icon A causes the program ID "S100" of the subprogram A associated with the icon A to be read. The program ID "M123456789" of the main program, the program ID "S100" of the subprogram A and the user ID and password for identifying the user are transmitted to the server 3. If the identity of the user has been established, the server 3 selects the subprogram A and issues a key for releasing the subprogram A on the basis of the data transmitted from the information terminal 1. The subprogram A, the icon B, the release key and upgrade DB additional data are sent from the server 3 to the information terminal 1. In addition, the subprograms B through M, the icons B through M and upgrading additional data therefor are also transmitted to the information terminal in expectation of future purchase of these subprograms.

The information terminal 1 stores the subprograms A through M into the memory and displays the release key for the subprogram A on the WEB browser on the display 17. The user enters the release key into application software to thereby release the subprogram A. Next, the upgrading DB additional data is added to the upgrade management DB 13. In this additional data, not only the subprogram A but also the subprograms B through M are batch-entered. In addition, the version pointer is incremented by one and the display icon is changed from the icon A to the icon B associated with the subprogram B in order to prompt the user to purchase the next subprogram B. When the user next selects the icon B to purchase the subprogram B, he or she simply obtains the release key only from the server 3 to make the subprogram B available as in the first embodiment because the subprogram B has been already stored in the information terminal 1.

Reference is next made to the flowchart of FIG. 9 to describe the flow of processing of purchasing a subprogram prepared in the information terminal 1.

First, the processing from the step of selecting an icon to purchase a subprogram through the step of providing user authentication (from step A1 through step A6) remains unchanged from that in the first embodiment and description thereof is omitted. After the identity of the user has been established by the user authentication in the server 3, the information terminal 1 transmits the program ID of a subprogram (for example, the subprogram A) corresponding to the icon (the icon A) and the program ID of the main program (step A7). Upon receipt of these transmit data, the server selects the subprogram (subprogram A) requested by the information terminal 1 (step B1) and moreover selects the subprograms B through M prepared for future purchase. The server further selects new icons (icons B through M) corresponding to the subprograms B through M (step C1). In the third embodiment, unlike the second embodiment, the subprograms and the icons are batch-transmitted to the information terminal; thus, the release key for the purchased subprogram A is created (step C2). The subprograms A through M, the icons B through M, the release key for the purchased subprogram A and additional data to add records corresponding to the subprograms B through M to the upgrade management DB are transmitted to the information terminal 1 (step C3).

The information terminal 1 stores the received new subprograms and the received new icons into the first memory 11 and the second memory 12, respectively (step C4). The restriction of use of the purchased subprogram A is released by the release key (step A9). Furthermore, the records are added to the upgrade management DB and the record pointer is incremented (step C5).

The display controller 16 erases the icon A displayed on the display 17 (step A10) and instead displays the icon B on the display 17 to prompt the user to purchase the subprogram B (step A11).

According to the third embodiment, as described above, when the user notifies the server of his or her intention to purchase a subprogram, two or more subprograms and two or more icons are concurrently transmitted to the information terminal. Thus, the batch transmission of two or more subprograms prepared in the server 3 at the time of purchase of a subprogram eliminates the need of transmitting a subprogram and an icon anew at each time the main program is upgraded although the amount of data transmitted to the information terminal at one time increases. For example, once a mobile terminal has been upgraded in a state of wired connection, the user will not suffer from stress even at the time of upgrading in a state of wireless connection where the transmission rate is lower.

### (Fourth Embodiment)

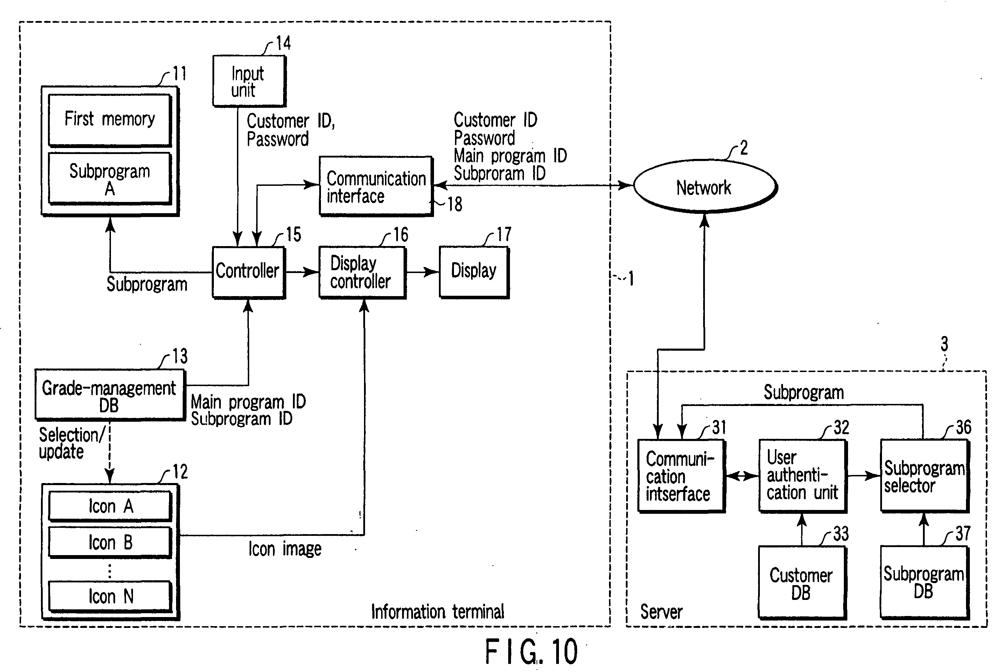

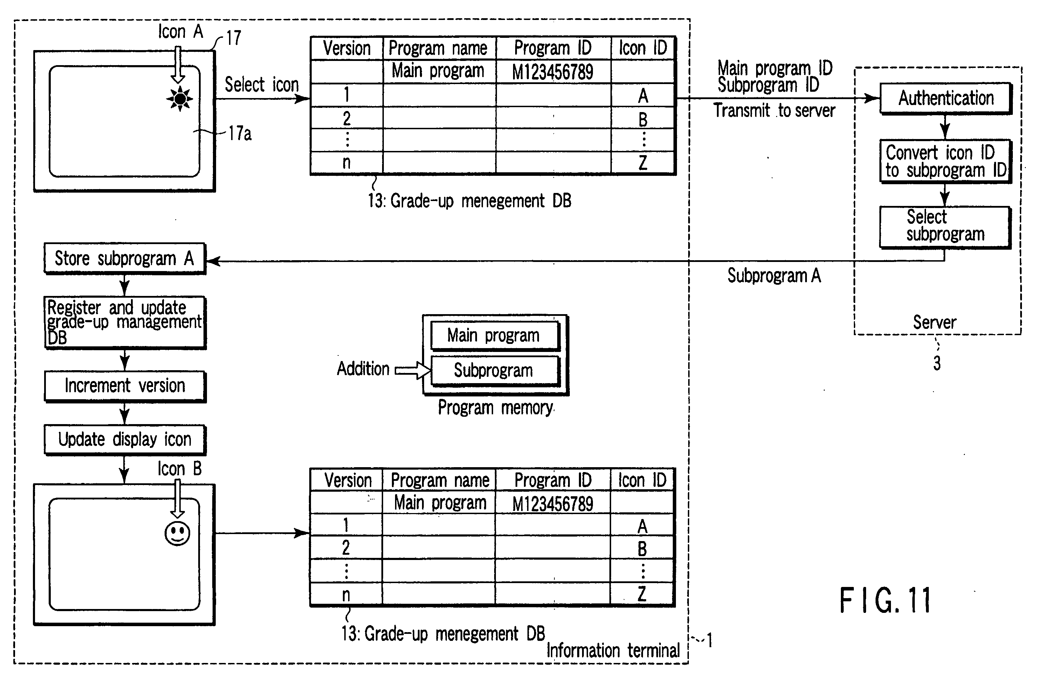

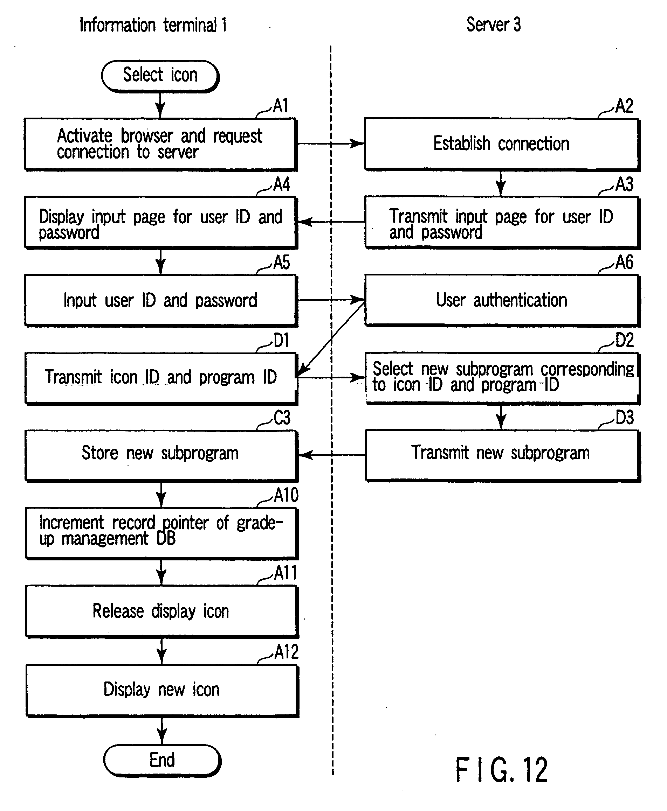

The fourth embodiment will be described with reference to FIGS. 10, 11 and 12. FIG. 10 is a schematic configuration of a network system which is applied to an information terminal according to the fourth embodiment of the present invention. FIG. 11 shows a specific processing example in the fourth embodiment of the present invention. FIG. 12 is a flowchart illustrating the operation of the fourth embodiment of the present invention. In FIGS. 10, 11 and 12, corresponding parts to those in FIGS. 1 through 9 are denoted by like reference numerals and detailed descriptions thereof are omitted.

The fourth embodiment is a modification of the second embodiment configured such that only the icons have been prepared in the information terminal 1 and only the subprograms to be purchased are obtained from the server 3. Thus, although the information terminal 1 is identical in basic configuration to that in FIG. 4, the sever 3 is not provided with the icon selector 38 and the icon DB 39 as shown in FIG. 10.

The operation of the network system thus configured will be described with reference to FIG. 11.

As shown in FIG. 11, clicking on the icon A allows the program ID of the main program, the icon ID and the user ID and password for identifying the user to be transmitted to the server 3. If the identity of the user has been established, the server 3 specifies and selects the subprogram A on the basis of the program ID of the main program and the icon ID and sends it to the information terminal 1.

The information terminal 1 stores the subprogram A into the first memory 11 and enters a record for it into the upgrade management DB 13. The subprogram version indicating pointer is incremented and the display icon is changed to the icon B associated with the subprogram B so as to prompt the user to purchase it.

Referring to the flowchart of FIG. 12, a description is given of the flow of processing of purchasing a subprogram prepared in the server 3.

First, the processing from the step of selecting an icon to purchase a subprogram through the step of providing user authentication (from step A1 through step A6) remains unchanged from that in the first embodiment and description thereof is omitted. After the identity of the user has been established by the user authentication in the server 3, the information terminal 1 transmits the icon ID and the main program ID to the server 3 (step D1). Upon receipt of these transmit data, the server 3 selects a new subprogram (step D2) and sends it to the information terminal 1 (step D3). Upon receipt of the new subprogram, the information terminal 1 stores it into the first memory 11 (step C3). The record pointer in the upgrade management DB is incremented (step A10).

The display controller 16 erases the icon A displayed on the display 17 (step A11) and instead displays the icon B on the display 17 so as to prompt the user to purchase the subprogram B next (step A12).

### (Fifth Embodiment)

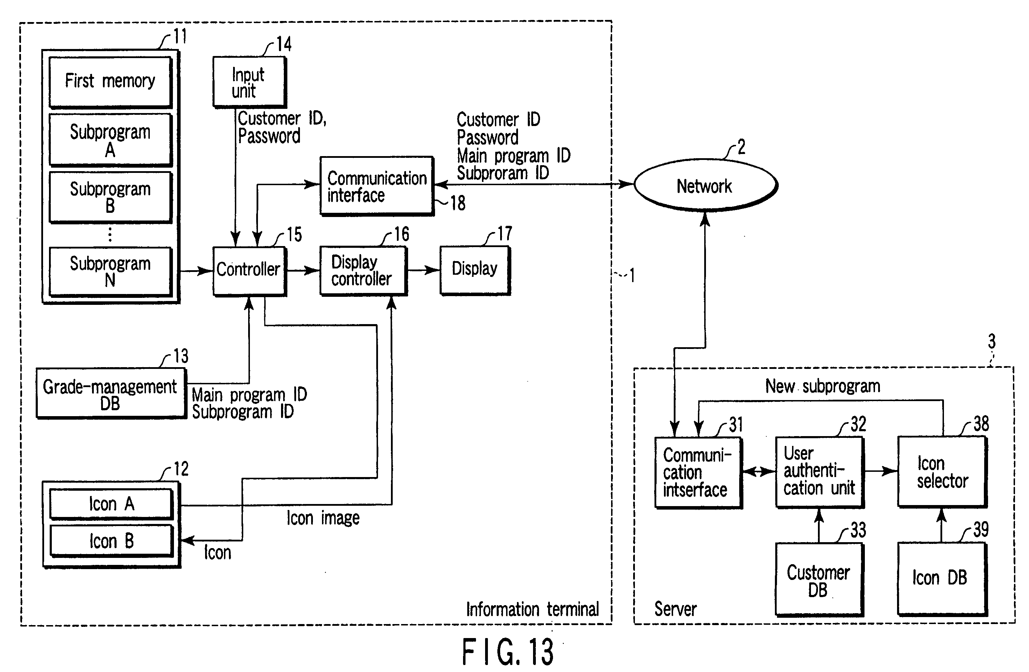

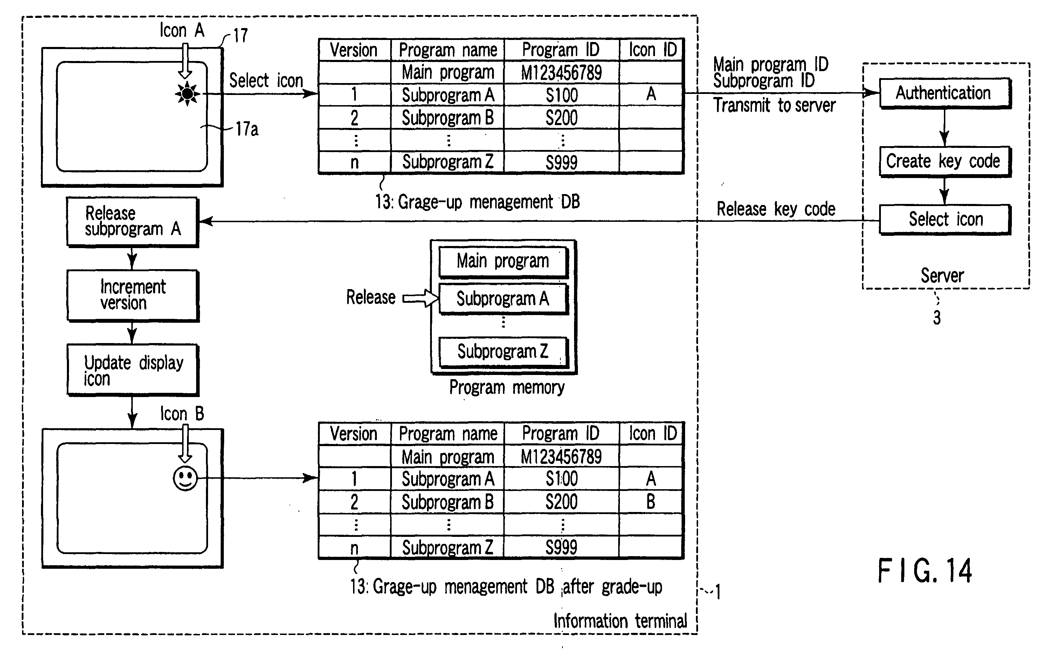

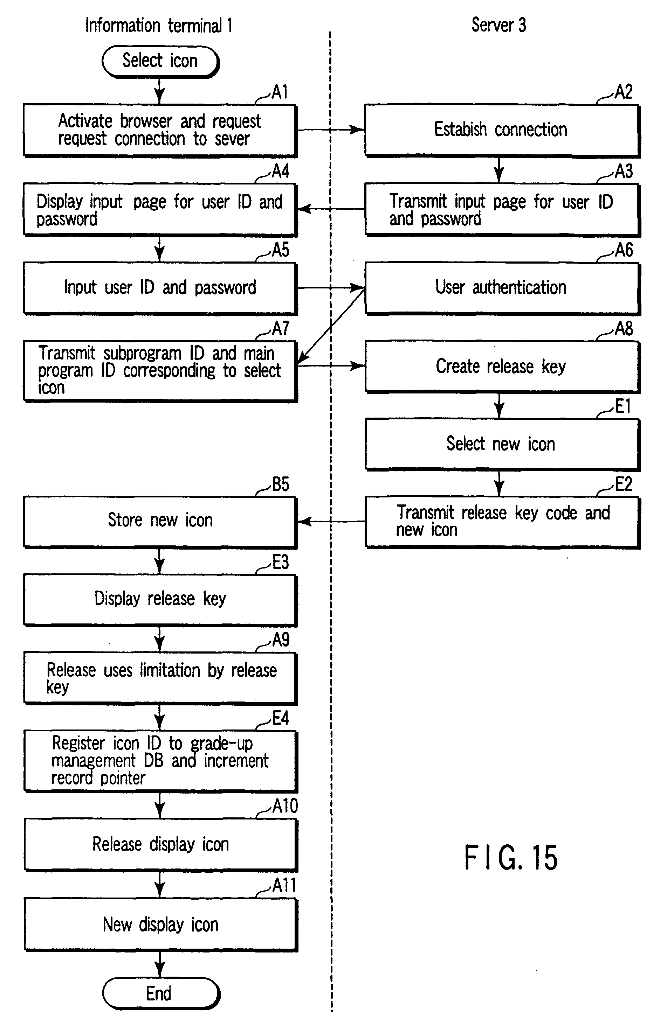

The fifth embodiment will be described with reference to FIGS. 13, 14 and 15. FIG. 13 is a schematic configuration of a network system which is applied to an information terminal according to the fifth embodiment of the present invention. FIG. 14 shows a specific processing example in the fifth embodiment of the present invention. FIG. 15 is a flowchart illustrating the operation of the fifth embodiment of the present invention. In FIGS. 13, 14 and 15, corresponding parts to those in FIGS. 1 through 12 are denoted by like reference numerals and detailed descriptions thereof are omitted.

The fifth embodiment is a modification of the second embodiment configured such that subprograms have been prepared in the information terminal 1 and icons corresponding to upgrading subprograms other than the subprogram to be purchased first are obtained from the server 3. Thus, although the information terminal 1 is identical in basic configuration to that in FIG. 4, the sever 3 is configured so as not to have the subprogram selector 36 and the subprogram DB 37 as shown in FIG. 13.

The operation of the network system thus configured will be described with reference to FIG. 14.

As shown in FIG. 14, clicking on the icon A allows the program ID of the subprogram A to be read. The program ID "M123456789" of the main program, the program ID "S100" of the subprogram A and the user ID and password for identifying the user are transmitted to the server 3. If the identity of the user has been established, the server 3 creates a release key for purchasing the subprogram A on the basis of the program ID of the main program and the subprogram ID and selects the icon B for purchasing the subprogram B. The server 3 then sends the release key for the subprogram A and the icon B to the information terminal 1.

The information terminal 1, upon receiving the release key, releases the subprogram A, stores the icon B, increments the version pointer, and changes the display icon from the icon A to the icon B associated with the subprogram B so as to prompt the user to purchase it next.

Referring to the flowchart of FIG. 15, a description is given of the flow of processing of purchasing a subprogram prepared in the information terminal 1.

First, the processing from the step of selecting an icon to purchase a subprogram through the step of providing user authentication (from step A1 through step A6) remains unchanged from that in the first embodiment and description thereof is omitted. After the identity of the user has been established by the user authentication in the server 3, the information terminal 1 transmits the program ID of the subprogram A corresponding to the icon A and the main program ID of the main program to the server 3 (step A7). Upon receipt of these transmit data, the server 3 creates the release key (step A8). The sever next selects a new icon (icon B) (step E1) and sends it together with the release key to the information terminal 1 (step E2).

Upon receipt of the release key and the new icon, the information terminal 1 first stores the new icon into the second memory 12 (step B5), then displays the release key on the display 17 (step E3) and releases the restriction of use of the subprogram A so that it becomes available (step A9). The icon ID of the new icon is entered into the upgrade management DB and the record pointer is incremented (step E4).

The display controller 16 erases the icon A displayed on the display 17 (step A10) and instead displays the icon B on the display 17 so as to prompt the user to purchase the subprogram B next (step A11).

The following inventions can be extracted from the embodiments described so far:

An information terminal device, which is communicable with a server via a communication line according to an aspect of the present invention is characterized by comprising: storage means for storing a first program and at least one first link information which corresponds a second programs different from the first program; display means for displaying the first link information; transmit means for, when the first link information is selected, transmitting to the server identification information for identifying the corresponding program stored in the storage means; receive means for receiving at least one of a release key and the second program transmitted from the server as the result of the identification information having been verified by the server; display control means for changing the first link information displayed on the display means to a second link information which corresponds to a program different from the second program.

In the information terminal device according to the above-mentioned aspect, the preferable modes are as follows. The following modes may be adapted solely or by combining them.
(1) The storage means further stores the second program which are allowed to be activated by a predetermined release key, the receive means receives the release key, and the control means selects a second program corresponding to the release key received from the server from-the storage means and selects second link information corresponding to a second program different from that selected second program.
(2) The receive means receives a second program transmitted from the server and second link information corresponding to a third program stored in the server, and the control means stores the second program and the second link information received from the server into the storage means.
(3) The receive means receives a second program transmitted from the server, second link information corresponding to an transmitted third program, and a release key for allowing the second program to be activated, and the control means stores the second program, the second link information and the release key received from the server into the storage means.
(4) The receive means receives a second program transmitted from the server; and the control means selects from the storage means second link information for receiving a third program from the server.
(5) The storage means further stores a first program, the receive means receives second link information for requesting for a second program different from the second program to be activated, and the control means allows access to the second program stored in the storage means on the basis of the release key received from the server.
(6) The second program is an upgrading program to add functions to the first program, the link information corresponding to the second program includes an icon, and the icon indicates the possibility of addition of another upgrading program to add further different functions.

The above inventions have been described as the information terminal device; however, this is not restrictive. The present invention may also be implemented as an additional function purchasing program, a program function adding method, and a network system including an information terminal device and a server.

The present invention is not limited to the aforementioned embodiments.

For example, although the above embodiments have been described as upgrading a program by clicking on an on-screen icon, a banner or text-based link information may be used instead of the icon.

Although the subprograms have been described as ones for upgrading the main program, they may be any other program related to the main program; for example, if the main program is a word processing program, the subprograms may be a graphics program, a spreadsheet program, a map drawing program, and so on.

The present invention may be practiced or embodied in still other ways without departing from the scope thereof as defined in the claims.

According to the present invention, when a user desires to obtain a new program from a recording medium or communications circuit, a display related to that program is made so that the user can select it on the display. Thus, the user is allowed to select a desired program at once and obtain it with certainty.

## Claims

1. An information terminal device, which is communicable with a server via a communication line, comprising:
storage means (11) for storing a first program and at least one first link information which corresponds to a second program different from the first program;
display means (17) for displaying the fist link information;
transmit means (18) for, when the first link information is selected, transmitting to the server identification information for identifying the corresponding program stored in the storage means (11); and
receive means (18) for receiving at least one of a release key and the second program transmitted from the server as the result of the identification information having been verified by the server; the information terminal device **characterized by**:
display control means (16) for changing the first link information displayed on the display means (17) to a second link information which corresponds to a program different from the second program after receipt of said second program.

2. The information terminal device according to claim 1, wherein:
the storage means (11) further stores the second program which are allowed to be activated by a predetermined release key,
the receive means (18) receives the release key, and further comprising
control means (15) which selects a second program corresponding to the release key received from the server from the storage means (11) and selects the second link information corresponding to a second program different from that selected second program.

3. The information terminal device according to claim 1, wherein:
the receive means (18) receives a second program transmitted from the server and second link information corresponding to a third program stored in the server, and further comprising:
control means (15) which stores the second program and the second link information received from the server into the storage means (11).

4. The information terminal device according to claim 1, wherein:
the receive means (18) receives a second program transmitted from the server, second link information corresponding to an transmitted third program, and a release key for allowing the second program to be activated, and further comprising:
control means (15) which stores the second program, the second link information and the release key received from the server into the storage means (11).

5. The information terminal device according to claim 1, wherein:
the receive means (18) receives a second program transmitted from the server; and further comprising:
control means (15) which selects from the storage means (11) the second link information for receiving a third program from the server.

6. The information terminal device according to claim 1, wherein:
the storage means (11) further stores a first program,
the receive means (18) receives second link information for requesting for a second program different from the second program to be activated, and further comprising:
control means (15) which allows access to the second program stored in the storage means (11) on the basis of the release key received from the server.

7. The information terminal device according to any one of claims 1 to 6, wherein the second program is an upgrading program to add functions to the first program, the at least one first link information corresponding to the second program includes an icon, and the icon indicates the possibility of addition of another upgrading program to add further different functions.

## Patentansprüche

1. Informationsterminalgerät, das mit einem Server über eine Kommunikationsleitung kommunizieren kann, aufweisend:
ein Speichermittel (11) zum Speichern eines ersten Programms und mindestens einer ersten Link- (Verknüpfungs-) Information, die einem zweiten Programm entspricht, das vom ersten Programm verschieden ist;
ein Anzeigemittel (17) zum Anzeigen der ersten Link-Information;
ein Sendemittel (18), um bei Wahl der ersten Link-Information eine Identifikationsinformation zum Identifizieren des entsprechenden im Speichermittel (11) gespeicherten Programms zum Server zu senden; und
ein Empfangsmittel (18) zum Empfangen mindestens entweder eines Freigabeschlüssels oder des zweiten vom Server gesendeten Programms als Ergebnis der vom Server verifizierten Identifikationsinformation;
wobei das Informationsterminalgerät **gekennzeichnet ist durch**:
ein Anzeigesteuerungsmittel (16) zum Ändern der auf dem Anzeigemittel (17) angezeigten ersten Link-Information in eine zweite Link-Information, die einem Programm entspricht, das vom zweiten Programm verschieden ist, nach dem Empfang des zweiten Programms.

2. Informationsterminalgerät nach Anspruch 1, bei dem:
das Speichermittel (11) ferner das zweite Programm speichert, das von einem vorgegebenen Freigabeschlüssel aktiviert werden kann,
das Empfangsmittel (18) den Freigabeschlüssel empfängt, und das ferner
ein Steuerungsmittel (15) aufweist, das ein zweites Programm entsprechend dem vom Server empfangenen Freigabeschlüssel aus dem Speichermittel (11) wählt, und die zweite Link-Information entsprechend einem zweiten Programm wählt, das vom gewählten zweiten Programm verschieden ist.

3. Informationsterminalgerät nach Anspruch 1, bei dem:
das Empfangsmittel (18) ein vom Server gesendetes zweites Programm und eine zweite Link-Information entsprechend einem dritten im Server gespeicherten Programm empfängt, und das ferner
ein Steuerungsmittel (15) aufweist, das das zweite Programm und die vom Server empfangene zweite Link-Information im Speichermittel (11) speichert.

4. Informationsterminalgerät nach Anspruch 1, bei dem:
das Empfangsmittel (18) ein vom Server gesendetes zweites Programm, eine zweite Link-Information entsprechend einem dritten gesendeten Programm und einen Freigabeschlüssel empfängt, damit das zweite Programm aktiviert werden kann, und das ferner
ein Steuerungsmittel (15) aufweist, das das vom Server empfangene zweite Programm, die zweite Link-Information und den Freigabeschlüssel im Speichermittel (11) speichert.

5. Informationsterminalgerät nach Anspruch 1, bei dem:
das Empfangsmittel (18) ein vom Server gesendetes zweite Programm empfängt und das ferner
ein Steuerungsmittel (15) aufweist, das die zweite Link-Information aus dem Speichermittels (11) wählt, um das dritte Programm vom Server zu empfangen.

6. Informationsterminalgerät nach Anspruch 1, bei dem:
das Speichermittel (11) ferner ein erstes Programm speichert,
das Empfangsmittel (18) eine zweite Link-Information empfängt, um die Aktivierung eines zweiten Programms, das vom zweiten Programm verschieden ist, anzufordern, und das ferner
ein Steuerungsmittel (15) aufweist, das den Zugriff auf das im Speichermittel (11) gespeicherte zweite Programm auf Basis des vom Server empfangenen Freigabeschlüssels gestattet.

7. Informationsterminalgerät nach einem der Ansprüche 1 bis 6, bei dem das zweite Programm ein Erweiterungsprogramm zum Hinzufügen von Funktionen zum ersten Programm ist, die mindestens eine Link-Information entsprechend dem zweiten Programm ein Piktogramm enthält und das Piktogramm die Möglichkeit, ein weiteres Erweiterungsprogramm zum Hinzufügen weiterer anderer Funktionen hinzuzufügen, angibt.

## Revendications

1. Terminal informatique qui peut communiquer avec un serveur par l'intermédiaire d'une ligne de communication, comprenant :
un moyen de stockage (11) pour stocker un premier programme et au moins des informations d'une première liaison qui correspondent à un deuxième programme différent du premier programme ;
un moyen d'affichage (17) pour afficher les informations de la première liaison ;
un moyen de transmission (18) pour transmettre au serveur, lorsque les informations de la première liaison sont sélectionnées, des informations d'identification pour identifier le programme correspondant stocké dans le moyen de stockage (11) ; et
un moyen de réception (18) pour recevoir au moins un entre une clé de libération et le deuxième programme transmis à partir du serveur consécutivement à la vérification par le serveur des informations relatives à l'identification ;
le terminal informatique **caractérisé par** :
un moyen de commande d'affichage (16) pour changer les informations de la première liaison sur le moyen d'affichage (17) en des informations d'une deuxième liaison qui correspondent à un programme différent de celui du deuxième programme après réception dudit deuxième programme.

2. Terminal informatique selon la revendication 1, dans lequel :
le moyen de stockage (11) stocke en outre le deuxième programme, lesquels sont autorisés à être activés par une clé de libération prédéfinie,
le moyen de réception (18) reçoit la clé de libération, et comprend en outre
un moyen de commande (15) qui choisit un deuxième programme correspondant à la clé de libération reçue du serveur à partir du moyen de stockage (11) et choisit les informations de la deuxième liaison correspondant à un deuxième programme différent du deuxième programme sélectionné.

3. Terminal informatique selon la revendication 1, dans lequel :
le moyen de réception (18) reçoit un deuxième programme transmis à partir du serveur et des informations de la deuxième liaison, correspondant à un troisième programme stocké dans le serveur, et comprenant en outre :
un moyen de commande (15) qui stocke le deuxième programme et les informations de la deuxième liaison reçus du serveur dans le moyen de stockage (11).

4. Terminal informatique selon la revendication 1, dans lequel :
le moyen de réception (18) reçoit un deuxième programme transmis du serveur, des informations de la deuxième liaison correspondant à un troisième programme transmis, et une clé de libération pour permettre au deuxième programme d'être activé, et comprenant en outre :
un moyen de commande (15) qui stocke le deuxième programme, les informations de la deuxième liaison et la clé de libération reçus du serveur dans le moyen de stockage (11).

5. Terminal informatique selon la revendication 1, dans lequel :
le moyen de réception (18) reçoit un deuxième programme transmis à partir du serveur ; et comprenant en outre :
un moyen de commande (15) qui choisit dans le moyen de stockage (11) les informations de la deuxième liaison pour recevoir un troisième programme à partir du serveur.

6. Terminal informatique selon la revendication 1, dans lequel :
le moyen de stockage (11) stocke en outre un premier programme,
le moyen de réception (18) reçoit des informations de la deuxième liaison pour demander qu'un deuxième programme différent du deuxième programme soit activé, et comprenant en outre :
un moyen de commande (15) qui permet l'accès au deuxième programme stocké dans le moyen de stockage (11) sur la base d'une clé de libération reçue du serveur.

7. Terminal informatique selon l'une quelconque des revendications 1 à 6, dans lequel le deuxième programme est un programme de mise à niveau pour ajouter des fonctions au premier programme, l'au moins une information de la première liaison correspondant au deuxième programme comporte une icône, et l'icône indique la possibilité d'ajouter un autre programme de mise à niveau pour ajouter d'autres fonctions différentes.
